# NEUE EUROPÄISCHE PATENTSCHRIFT

(11) **EP 0 714 868 B2**
(45) Veröffentlichungstag und Bekanntmachung des Hinweises auf die Entscheidung über den Einspruch: **05.10.2005**
(45) Hinweis auf die Patenterteilung: 05.01.2000
(21) Anmeldenummer: 95118503.2
(22) Anmeldetag: 24.11.1995
(51) Int. Cl.: C04B 35/66, B22D 41/46, C21C 5/46

(54) **Stichlochmasse und Verfahren zu deren Herstellung**
Tap-hole mass and process for its production
Masse de bouchage et procédé pour sa préparation

(30) Priorität: 03.12.1994 DE 4443083
(43) Veröffentlichungstag der Anmeldung: 05.06.1996
(73) Patentinhaber: Sachtleben Chemie GmbH, 47198 Duisburg (DE); G S R - Gesellschaft für synthetische Rohstoffe, 47441 Moers (DE)
(72) Erfinder: Amirzadeh-Asl, Djamschid, Dr., D-47445 Moers (DE); Fünders, Dieter, Dr., D-47198 Duisburg (DE)
(74) Vertreter: Uppena, Franz

(56) Entgegenhaltungen:
- EP-A- 0 046 473
- EP-A- 0 201 179
- DE-A- 3 637 720
- DE-A- 3 700 895
- DE-C- 4 303 724
- GB-A- 2 260 140
- DATABASE WPI Week 8325 Derwent Publications Ltd., London, GB; AN 83-60896K & SU-A-948 972 (DNEPR METAL WORKS) , 10.August 1982
- G. Routschka, Feuerfeste Werkstoffe, 3.Auflage, Vulkan Verlag, Essen, Seiten 406, 407.
- VDEh "Slag Atlas", 2. Aufl. 1995, Seiten 48, 118
- S.P. Ajay, N. Chandra, Steel Indi Vol. 23, No. 1, April 2000, Seiten 21-24.
- T. Okada, K. Shimomura, Taikabutsu Overseas Vol. 12, No. 2, Seiten 4 - 10.
- VDEh Fachausschussbericht Nr. 1036, 6./7. September 2001.

## Beschreibung

Die vorliegende Erfindung betrifft eine Stichlochmasse und ein Verfahren zu deren Herstellung sowie die Verwendung des Rückstands aus der TiO₂-Herstellung zur Herstellung von Stichlochmasse.

Schmelzreaktoren, wie z. B. Hochöfen und Kupolöfen weisen zum Verschließen und zur Entnahme der Schmelze eine Absticheinrichtung auf. Dabei wird ein Abstichkanal mit einer Stichlochmasse verschlossen. Die Stichlochmasse ist eine plastische Masse, die mit einer Stopfmaschine in den Abstichkanal gedrückt wird. Vor dem vollständigen Aushärten der Stichlochmasse kann nach der Gegenschlagtechnik eine Eisenstange in die Masse eingedrückt werden, die bis in den Schmelzraum des Ofens hineinreicht. Der Ofen bliebt nach Aushärten der Stichlochmasse so lange verschlossen, bis die Stichlochmasse aufgebohrt wird oder nach der Gegenschlagtechnik die Eisenstange herausgezogen wird. Das Öffnen des Ofens wird als Abstechen bezeichnet.

Die Stichlochmasse muß für die chemische und physikalische Beanspruchung während des Schmelzprozesses eine gute Festigkeit haben. Die Stichlochmasse muß eine hohe Plastizität aufweisen, damit während des Stopfens das gesamte Abstichloch ausgefüllt wird und nach der Gegenschlagtechnik die Eisenstange leicht in die Masse eingedrükt werden kann. Die Plastizität ist wichtig, damit eine pilzartige Überlappung des Abstichlochs auf der heißen Seite des Schmelzreaktors gebildet wird. Die Stichlochmasse muß eine gute Porösität haben, damit die flüchtigen Bestandteile nach außen entweichen können, um nicht die Stichlochmasse explosionsartig aus dem Abstichloch herauszusprengen. Die Stichlochmasse muß eine hohe Erosionsbeständigkeit bei steigender Temperatur und hohe Korrosionsbeständigkeit gegen Schlackenangriff aufweisen. Sie muß zusätzlich eine hohe Feuerfestigkeit und Korrosionsbeständigkeit gegenüber der im Roheisen und in der Schlacke vorhandenen Alkalimetalle haben.

Zur Herstellung von Stichlochmasse werden unter anderem Klebsand, Schamotte, Andalusit, Bauxit, Korund und Tabulartonerde als Hauptbestandteile verwendet. Zur Steigerung der Feuerfestigkeit werden unter anderem SiC oder Si₃N₄ dazugegeben. Als Bindemittel werden Pech, Teer und Kunstharz sowie als Plastifizierungsmittel Ton verwendet. Die Stichlochmassen weisen gewöhnlich die folgenden Anteile an Verbindungen in Gew.-% auf:

| | |
|---|---|
| SiO₂ | 10 bis 90 |
| Al₂O₃ | 2 bis 80 |
| SiC | 0 bis 30 |
| C | 2 bis 30 |

Neben Si₃N₄ kann TiO₂ in einer Menge < 1 % der Stichlochmasse zugesetzt werden. Die Stoffe Si₃N₄ und TiO₂ sind sehr teuer.

Die Aufgabe der vorliegenden Erfindung besteht darin, eine Stichlochmasse mit hoher Feuerfestigkeit, Errosions- und Korrosionsbeständigkeit sowie ein wirtschaftliches und umweltfreundliches Verfahren zur Herstellung von Stichlochmasse bereitzustellen.

Die Aufgabe der vorliegenden Erfindung wird durch eine Stichlochmasse gelöst, die die folgenden Bestandteile in Gew.-% enthält:

| | |
|---|---|
| 5 bis 80 | SiO₂ |
| 2 bis 70 | Al₂O₃ |
| 4 bis 30 | TiO₂ |
| 0 bis 50 | SiC |
| 0 bis 25 | Si₃N₄ |
| 0 bis 6 | Fe₂O₃ |
| 0 bis 15 | ZrO₂ |
| 2 bis 40 | Bindemittel |

Die erfindungsgemäße Stichlochmasse weist eine sehr gute Feuerfestigkeit sowie Errosions- und Korrosionsbeständigkeit auf. Sie ist sowohl gegen hohe Temperaturen, geschmolzenes Eisen sowie Schladken sehr gut beständig. Für die erfindungsgemäße Stichlochmasse können TiO₂-haltige Rückstände verwendet werden. Damit werden diese Rüchstände einer industriellen Verwertung zugeführt und müssen nicht teuer entsorge oder deponiert werden. Durch die Verwendung von TiO₂-haltigen Rückständen wird eine kostengünstige Stichlochmasse bereitgestellt. Die erfindungsgemäße Stichlochmasse enthält 2 bis 25 Gew.-% C.

Eine besonders bevorzugte Ausgestaltung der Erfindung ist eine Stichlochmasse, die 15 bis 30 Gew.-% Bindemittel enthält. In diesem Bereich für die Menge des Bindemittels wird eine sehr hohe Druckfestigkeit der Stichlochmasse im Ofen erreicht.

Eine bevorzugte Ausgestaltung der Erfindung ist eine Stichlochmasse, die mindestens ein Bindemittel ausgewählt aus Kunstharz, Pech oder Teer enthält. Mit diesen Bindemitteln wird eine günstige und schnelle Abbindung erreicht.

Erfindungsgemäß ist ein Verfahren zur Herstell ung von Stichlochmasse vorgesehen, wobei die Bestandteile homogenisiert werden und Bindemittel dazugegeben wird, das Gemisch homogenisiert wird und die homogenisierte Substanz gepreßt wird. Nach dem die Bestandteile homogenisiert sind, wird die erforderliche Menge an Bindemittel zugesetzt. Die Masse wird danach so lange gemischt, bis eine homogene Masse erhalten wird. In der letzten Mischphase beträgt die Mischdauer bis zu 20 Minuten. Diese homogenisierte Masse wird bevorzugt in einem Extruder (Strangpresse) in die Batzenform überführt.

Erfindungsgemäß ist die Verwendung des Rückstands aus der TiO₂-Herstellung zur Herstellung von Stichlochmasse vorgesehen. Das bisher für die Stichlochmasse verwendete TiO₂ war überwiegend natürlich vorkommendes TiO₂. Die Stichlochmasse hatte aufgrund der in der natürlich vorkommenden Substanz enthaltenen Bestandteile nicht die geforderten Eigenschaften. Die natürlichen Rohstoffe sind teuer, so daß ihre Verarbeitung zu Stichlochmasse unwirtschaftlich ist. Es hat sich als sehr vorteilhaft erwiesen, den Rückstand aus der TiO₂-Herstellung für die Herstellung von Stichlochmasse zu verwenden. Diese erfindungsgemäße Stichlochmasse weist eine außerordentlich gute Feuerfestigkeit sowie Errosions- und Korrosionsbeständigkeit auf. Sie ist sowohl gegen hohe Temperaturen, geschmolzenes Eisen sowie Schlacken hervorragend beständig. Diese Stichlochmasse ist aufgrund der preiswerten Rohstoffe sehr wirtschaftlich. Die Entsorgungs-und Deponiekosten werden für den TiO₂-Rückstand eingespart. Die natürlichen TiO₂-Vorkommen werden geschont.

Der Rückstand aus der TiO₂-Herstellung enthält die folgenden Hauptbestandteile in Gew.-%:

| | |
|---|---|
| 40 bis 70 | TiO₂ |
| 5 bis 40 | SiO₂ |
| 2 bis 20 | Al₂O₃ |
| 2 bis 10 | Fe₂O₃ |

Dieser Rückstand aus der TiO₂-Herstellung wird erfindungsgemäß als Rohstoff für die Stichlochmasse verwendet.

Als Rückstand aus der TiO₂-Herstellung gilt erfindungsgemäß der Rückstand aus der TiO₂-Herstellung nach dem Sulfat- und Chloridverfahren. Verwendet werden kann auch TiO₂, das nach beiden Verfahren hergestellt wird. Besonders vorteilhaft ist die Verwendung von verunreinigtem TiO₂, dessen weitere Verarbeitung unwirtschaftlich ist.

Die Erfindung wird im folgenden anhand eines Beispiels näher erläutert.

### Beispiel

35 kg Rückstand aus der TiO₂-Herstellung, der 60 Gew.-% TiO₂, 15 Gew.-% SiO₂ und 4 Gew.-% Al₂O₃ enthielt und einen Wassergehalt von <1 % aufwies, wurden mit 44 kg Al₂O₃ in einem Chargen-Mischer 2 Minuten homogenisiert. Nach Zugabe von 21 kg Kunstharz wurde das Gemisch in einer Strangpresse extrudiert. Das gepreßte Material wurde nach einer Aushärtezeit von 8 Tagen 5 Stunden bei einer Temperatur von 1000 °C gesintert, um die thermische Belastung im Inneren eines Ofens zu simulieren. Die chemische Analyse des gesinterten Materiales ergab das folgende Ergebnis: 25 Gew.-% TiO₂, 53 Gew.-% Al₂O₃ und 8 Gew.-% SiO₂. Das Material hatte eine Druckfestigkeit von 9 N/mm² und wies 20 Gew.-% flüchtige Anteile auf.

## Patentansprüche

1. Stichlochmasse, enthaltend in Gew.-%:
| | |
|---|---|
| 5 bis 80 | SiO₂ |
| 2 bis 70 | Al₂O₃ |
| 2 bis 30 | TiO₂ |
| 0 bis 50 | SiC |
| 0 bis 25 | Si₃N₄ |
| 0 bis 6 | Fe₂O₃ |
| 0 bis 15 | ZrO₂ |
| 2 bis 40 | Bindemittel |

2. Stichlochmasse nach dem Anspruch 1, enthaltend 15 bis 30 Gew.-% Bindemittel.

3. Stichlochmasse nach den Ansprüchen 1 oder 2, die mindestens ein Bindemittel ausgewählt aus Kunstharz, Pech oder Teer enthält.

4. Verfahren zur Herstellung von Stichlochmasse nach den Ansprüchen 1 bis 3, wobei die Bestandteile homogenisiert werden, Bindemittel dazugegeben wird, das Gemisch homogenisiert wird und die homogenisierte Substanz gepreßt wird.

5. Verwendung des Rückstandes aus der TiO₂-Herstellung zur Herstellung von Stichlochmasse nach den Ansprüchen 1 bis 3.

## Claims

1. A tap-hole mixture containing, in % by weight:
| | |
|---|---|
| 5 to 80 | SiO₂ |
| 2 to 70 | Al₂O₃ |
| 4 to 30 | TiO₂ |
| 0 to 50 | SiC |
| 0 to 25 | Si₃N₄ |
| 0 to 6 | Fe₂O₃ |
| 0 to 15 | ZrO₂ |
| 2 to 40 | Binder |

2. A tap-hole mixture according to claim 1, containing 15 to 30% by weight binder.

3. A tap-hole mixture according to claim 1 or 2, which contains at least one binder selected from synthetic resin, pitch or tar.

4. A process for producing a tap-hole mixture according to claims 1 to 3, wherein the constituents are homogenised, binder is added thereto, the mixture is homogenised and the homogenised substance is compressed.

5. The use of the residue from TiO₂ manufacture to produce a tap-hole mixture according to claims 1 to 3.

## Revendications

1. Masse à bouchage, comprenant, en pourcentages pondéraux :
- de 5 à 80 % de SiO₂,
- de 2 à 70 % de Al₂O₃,
- de 4 à 30 % de TiO₂,
- de 0 à 50 % de SiC,
- de 0 à 25 % de Si₃N₄,
- de 0 à 6 % de Fe₂O₃,
- de 0 à 15 % de ZrO₂,
- et de 2 à 40 % d'un liant.

2. Masse à bouchage, conforme à la revendication 1, qui contient de 15 à 30 % en poids de liant.

3. Masse à bouchage, conforme à la revendication 1 ou 2, qui contient au moins un liant choisi parmi une résine synthétique, de la poix ou du goudron.

4. Procédé de fabrication d'une masse à bouchage conforme à l'une des revendications 1 à 3, dans lequel on homogénéise les constituants, on y ajoute le liant, on homogénéise le mélange et l'on presse la matière homogénéisée.

5. Emploi de résidus de production de TiO₂ pour la fabrication d'une masse à bouchage conforme à l'une des revendications 1 à 3.
